# EUROPEAN PATENT SPECIFICATION

(11) **EP 2 599 699 B1**
(45) Date of publication and mention of the grant of the patent: **24.08.2016**
(21) Application number: 12191238.0
(22) Date of filing: 05.11.2012
(51) Int. Cl.: B62J 6/02, B62J 27/00, B62K 19/30

(54) **Two-wheeled motor vehicle**
Zweirädriges Motorfahrzeug
Véhicule motorisé à deux roues

(30) Priority: 30.11.2011 JP 2011262676
(43) Date of publication of application: 05.06.2013
(73) Proprietor: Honda Motor Co., Ltd., Tokyo 107-8556 (JP)
(72) Inventor: Takemura, Hiroo, Saitama, 351-0193 (JP); Fukuda, Satoshi, Saitama, 351-0193 (JP); Taniguchi, Masayuki, Saitama, 351-0193 (JP); Yonai, Masato, Saitama, 351-0193 (JP)
(74) Representative: Weickmann & Weickmann PartmbB

(56) References cited:
- EP-A1- 2 093 136
- GB-A- 629 144
- US-A1- 2010 148 469

## Description

### Technical Field

The present invention relates to a two-wheeled motor vehicle according to the preamble of claim 1, in which guard pipes disposed outside both sides of the vehicle body are mounted on these sides.

### Background Art

A technique relating to guard pipes is known from Japanese Patent Laid-Open No. JP 2011-143845. In this technique, guard pipes disposed on both sides of the vehicle body are fixed to the vehicle body in a fastened manner at a first fixing point and are connected to the vehicle body in a floating manner at a second fixing point. In addition, they are connected to a crossing pipe provided between the pair of left and right guard pipes in a floating manner at a third fixing point. Based on this structure, change in the vehicle body rigidity depending on whether or not the guard pipes are present is suppressed.

### Summary of the Invention

### Problem to be Solved by the Invention

In the structure disclosed in the above-described Japanese Patent Laid-Open No. JP 2011-143845, the crossing pipe is necessary in addition to the left and right guard pipes, and therefore the number of parts increases.

A two-wheeled motor vehicle according to the preamble of claim 1 is known from GB 629144 A.

EP 2 093 136 A1 and US 2010/148469 A1 disclose further two-wheeled motor vehicles in which guard pipes disposed outside both sides of a vehicle body are mounted directly on the sides of the vehicle body.

It is an object of the invention to provide an alternative two-wheeled motor vehicle comprising a front cowl which is protected by left and right guard pipes which are fixed to both left and right sides of a vehicle body frame while suppressing a change in the vehicle body rigidity depending on whether or not the left and right guard pipes are present.

### Means for Solving the Problem

This object is achieved by a two-wheeled motor vehicle in accordance with claim 1.

In accordance with the invention as recited in claim 2, the brackets are formed of an iron material.

In accordance with the invention as recited in claim 3, the guard pipes are formed of an aluminum alloy.

In accordance with the invention as recited in claim 4, the vehicle body frame includes a head pipe that steerably supports the front fork rotatably supporting the front wheel and a pair of left and right main frames extending rearward and downward from the head pipe, and the guard pipes are mounted to outer side surfaces of both of the main frames with the intermediary of the brackets.

In accordance with the invention as recited in claim 5, on each side of the vehicle body a vehicle component mounting part for mounting a vehicle component is provided in the vehicle body frame at such a position as to overlap with the guard pipe support part in side view.

In accordance with the invention as recited in claim 6, on each side of the vehicle body the mounting part is fixed to the vehicle body frame at such a position as to be covered by the guard pipe from the lateral outside.

In accordance with the invention as recited in claim 7, on each side of the vehicle body at least one of the vehicle component mounting part provided in the vehicle body frame and a diameter-increased head of a bolt inserted in the vehicle component mounting part in order to mount the vehicle component is fitted with the guard pipe support part of the bracket in such a manner as to permit movement of the guard pipe support part in the vehicle width direction relative to the vehicle body frame.

In accordance with the invention as recited in claim 8, on each side of the vehicle body an abutting surface of the guard pipe to the guard pipe support part of the bracket attached to an outer side surface of a bracket support part of the main frame of the vehicle body frame is disposed laterally outside the outer side surface of the bracket support part of the main frame.

In accordance with the invention as recited in claim 9, the connecting portion is supported, with the intermediary of an elastic member, by a front cowl stay that is fixed to the vehicle body frame in such a manner as to support the front cowl.

An engine main body 19 of an embodiment corresponds to the vehicle component of the present invention and a mount rubber 64 of the embodiment corresponds to the elastic member of the present invention.

### Effects of the Invention

According to the invention as recited in claim 1, the left and right guard pipes are monolithically connected. This can reduce the number of parts compared with the related-art structure requiring a crossing pipe in addition to the left and right guard pipes. In addition, the pair of left and right brackets as members separate from the guard pipes each have the mounting part, the guard pipe support part, and the support plate part formed in a flat plate shape along the plane perpendicular to the vehicle width direction and linking the mounting part and the guard pipe support part. The mounting parts are fixed to both the left and right sides of the vehicle body frame and the guard pipes are fixed to the guard pipe support parts. Therefore, the guard pipes are positioned in vertical and front-rear directions, and can be displaced in the vehicle width direction due to the bending of the support plate parts of the brackets in the vehicle width direction when a load equal to or larger than a predetermined value acts in the vehicle width direction. Thus, change in the vehicle body rigidity depending on whether or not the guard pipes are present can be suppressed.

Further, the guard pipe is so formed as to extend toward the front side from the mounting position to the guard pipe support part with its lower part along the lower rim of the front cowl in side view, and the front end parts of the left and right guard pipes are monolithically connected by the connecting portion in front of the front fork. Therefore, even the front cowl can also be protected by the guard pipes.

Furthermore, according to the invention as recited in claim 2, the brackets are formed of an iron material. Thus, the support plate parts of the brackets are easy to deform and difficult to rupture.

According to the invention as recited in claim 3, the guard pipes are formed of an aluminum alloy. Therefore, influence on the weight balance of the vehicle body can be avoided through reduction in the weight of the guard pipes and assembly of the guard pipes.

According to the invention as recited in claim 4, the vehicle body frame has the pair of left and right main frames extending rearward and downward from the head pipe. In the vehicle body frame having such a shape, connecting the left and right main frames to each other readily causes influence on the lateral rigidity. However, the guard pipes are positioned in the vertical and front-rear directions and are supported on both of the main frames with the intermediary of the brackets in such a manner as to be capable of being displaced in the vehicle width direction when a load equal to or larger than a predetermined value acts in the vehicle width direction. Thus, change in the vehicle body rigidity can be suppressed although the left and right main frames are monolithically connected via the guard pipes.

According to the invention as recited in claim 5, on each side of the vehicle body the vehicle component mounting part for mounting the vehicle component is provided in the vehicle body frame and the guard pipe support part overlaps with the vehicle component mounting part in side view. Therefore, appearance with a sense of unity of the guard pipes and the vehicle body frame can be obtained.

According to the invention as recited in claim 6, on each side of the vehicle body the mounting part is fixed to the vehicle body frame at such a position as to be covered by the guard pipe from the lateral outside. Therefore, appearance with a sense of more unity of the guard pipe and the vehicle body frame can be obtained.

According to the invention as recited in claim 7, on each side of the vehicle body at least one of the vehicle component mounting part in the vehicle body frame and the diameter-increased head of the bolt inserted in the vehicle component mounting part is fitted with the guard pipe support part of the bracket in such a manner as to permit the movement of the guard pipe support part in the vehicle width direction relative to the vehicle body frame. Thus, alignment of the guard pipe support part with respect to the vehicle body frame is easy and enhancement in the assemblability can be achieved. In addition, the concentricity of the guard pipe support part and the bolt is increased and enhancement in the design can be achieved.

According to the invention as recited in claim 8, on each side of the vehicle body the abutting surface of the guard pipe to the guard pipe support part is disposed laterally outside the outer side surface of the bracket support part of the main frame. Thus, the guard pipe can be easily assembled to the bracket from the lateral outside of the vehicle body frame, so that the assemblability can be enhanced.

According to the invention as recited in claim 9, the connecting portion is supported by the front cowl stay fixed to the vehicle body frame with the intermediary of the elastic member. Therefore, in addition to achievement of the structure in which a rear part of the guard pipe is supported by the bracket displaceably in the vehicle width direction, positioning of the guard pipe is surely carried out even when the guard pipe has a shape long in the front-rear direction, and influence on the vehicle body rigidity is also absent.

### Brief Description of the Drawings

FIG. 1 is a side view of a two-wheeled motor vehicle of a first embodiment.
FIG. 2 is a side view of a front part of a vehicle body frame in a state in which guard pipes and fog lamps are mounted.
FIG. 3 is a plan view according to an arrow 3 in FIG. 2.
FIG. 4 is an enlarged sectional view taken along a line 4-4 in FIG. 2.
FIG. 5 is an enlarged sectional view taken along a line 5-5 in FIG. 2.
FIG. 6 is a sectional view taken along a line 6-6 in FIG. 3.
FIG. 7 is a sectional view taken along a line 7-7 in FIG. 6.
FIG. 8 is a perspective view of a left fog lamp when seen from the obliquely rear side in a state in which the fog lamp is covered by a cover and a cap is removed therefrom.
FIG. 9 is an exploded perspective view of the left fog lamp, the cover, and the cap when seen from the obliquely front side.
FIG. 10 is a diagram showing the left fog lamp, a right fog lamp and parts relating to these fog lamps in comparison with each other when seen from the rear side.
FIG. 11 is a plan view, corresponding to FIG. 3, of a second embodiment.

### Modes for Carrying Out the Invention

Embodiments of the present invention will be described below with reference to the accompanying drawings. In the following description, the respective directions such as front, rear, up, down, left, and right directions are directions from the viewpoint of a rider aboard the two-wheeled motor vehicle.

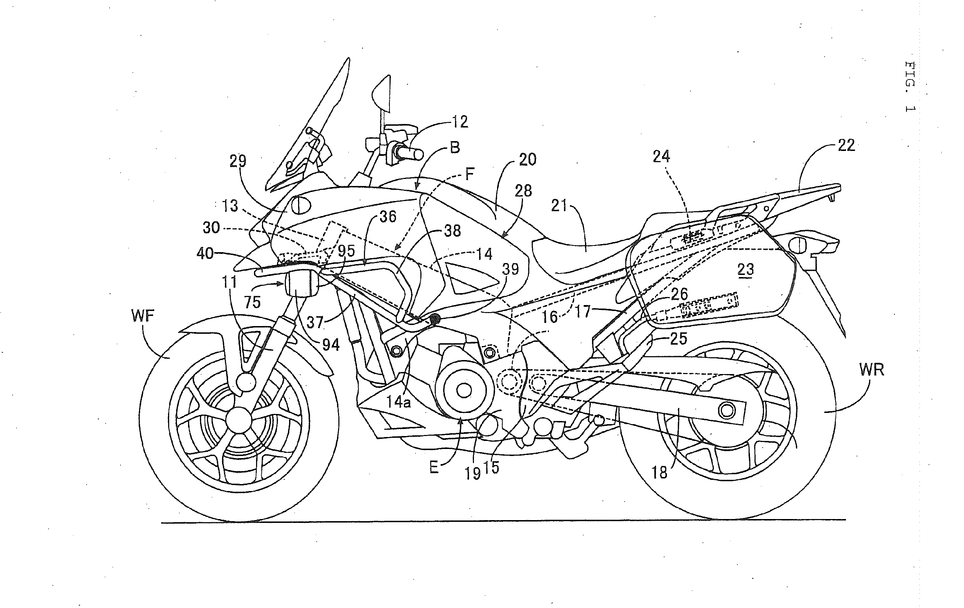

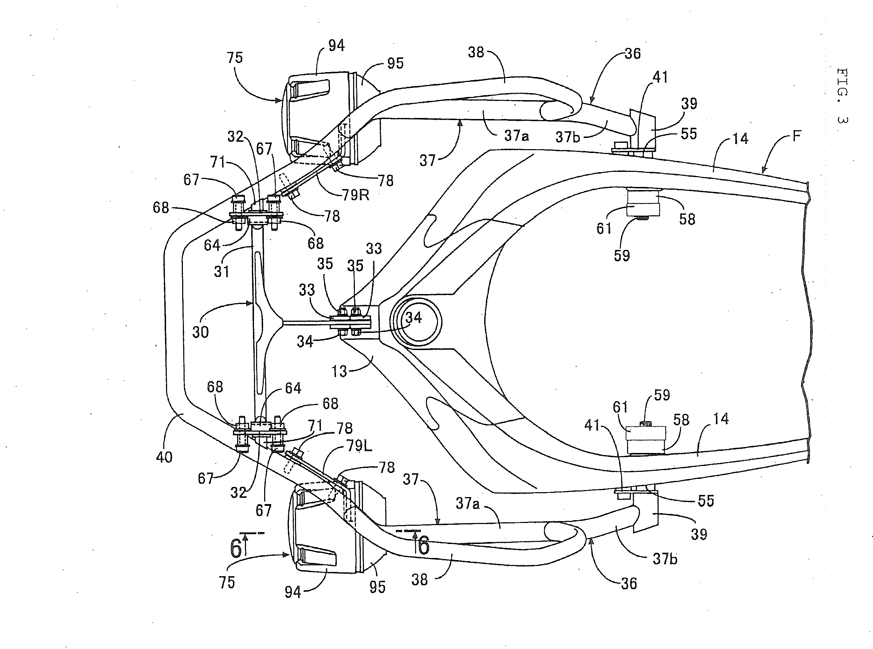

A first embodiment of the present invention will be described with reference to FIGS. 1 to 10. Referring first to FIGS. 1 to 3, a vehicle body frame F of a two-wheeled motor vehicle includes a head pipe 13 that steerably supports a front fork 11 rotatably supporting a front wheel WF and a bar-like steering handle 12, and a pair of left and right main frames 14, 14 extending rearward and downward from the head pipe 13. The vehicle body frame F further includes a pair of left and right pivot frames 15, 15 that are monolithically continuous with rear ends of both of the main frames 14, 14 and extend downward, and a pair of left and right seat rails 16, 16 that are so provided as to be continuous with the rear ends of the main frames 14, 14 and extend rearward and upward. The vehicle body frame F further includes a pair of left and right rear sub-frames 17, 17 that link lower parts of the pivot frames 15, 15 with rear parts of the seat rails 16, 16 and extend rearward and upward.

A rear wheel WR is rotatably supported by a rear end part of a swing arm 18 supported by the pivot frames 15, 15 swingably upward and downward, and an engine main body 19 of an engine E that exerts power to drive the rear wheel WR is disposed between the front wheel WF and the rear wheel WR. Furthermore, the engine main body 19 is supported by lower end parts of engine hangers 14a, 14a that are formed monolithically with the main frames 14, 14 and extend downward from the main frames 14, 14, and also supported by the main frames 14, 14 and the pivot frames 15, 15 rearward of the engine hangers 14a, 14a.

With attention to FIG. 1, a fuel tank 20 is mounted on the main frames 14, 14 of the vehicle body frame F in such a manner as to be disposed above the engine E. Furthermore, a tandem-type riding seat 21 supported by the seat rails 16, 16 is disposed rearward of the fuel tank 20, and a carrier 22 on which an object can be loaded is disposed rearward of the riding seat 21.

A pannier case 23 can be mounted to a side of a rear part of the vehicle body frame F and this pannier case 23 is releasably engaged, from above, with a hook 24 provided on the vehicle body frame F near the seat rails 16, 16. A rod-like locking member 26 to be used for positioning the pannier case 23 is provided on a step holder 25 attached to a rear sub-frame 17, and this locking member 26 is releasably engaged with the pannier case 23.

Part of the vehicle body frame F and part of the fuel tank 20 are covered by a vehicle body cover 28 that forms a vehicle body B together with the vehicle body frame F and is made of a synthetic resin. A front cowl 29 that configures part of the vehicle body cover 28 and covers a front part of the vehicle body frame F is supported by a front cowl stay 30 fixed to the head pipe 13 at a front end of the vehicle body frame F. This front cowl stay 30 has, in its front part, a pipe 31 extending along a vehicle width direction and cowl support plates 32, 32 bonded to both ends of the pipe 31 and is substantially formed into a T shape. The front cowl stay 30 is fastened to a pair of upper and lower stay mounting portions 33, 33 provided on a front surface of the head pipe 13 by bolts 34, 34 and nuts 35, 35 and the front cowl 29 is supported by the cowl support plates 32, 32.

Guard pipes 36, 36 disposed outside both sides of the vehicle body B are mounted on these sides. A guard pipe 36 is composed of a main pipe 37, a sub-pipe 38 bonded to an intermediate part of the main pipe 37, and a mounting member 39 bonded to a rear end of the main pipe 37 and is formed of an aluminum alloy.

The main pipe 37 is formed of a monolithic series of a front inclined part 37a inclined rearward and downward and a rear inclined part 37b that is inclined rearward and upward from a rear end of the front inclined part 37a and extends rearward. The mounting member 39 is welded to a rear end of the rear inclined part 37b. A front end of the front inclined part 37a is so inclined as to extend toward the center in the vehicle width direction as it extends toward the front side in plan view. Both end parts of the sub-pipe 38 formed substantially in a U shape opened toward an oblique front lower side are welded to an upper surface of a front end part of the front inclined part 37a and an upper surface of a rear part of the front inclined part 37a. In addition, a lower part of the guard pipe 36, i.e. the main pipe 37, is so formed as to be along a lower rim of the front cowl 29 in side view.

The pair of left and right guard pipes 36, 36 is monolithically connected. In this first embodiment, front end parts of the left and right guard pipes 36, 36 are monolithically connected via a connecting pipe 40 as a connecting portion disposed on the front side of the front fork 11. In addition, the main pipes 37, 37 of the pair of left and right guard pipes 36, 36 and the connecting pipe 40 are monolithically continuous, and both of the guard pipes 36, 36, the main pipes 37, 37, and the connecting pipe 40 are formed by bending processing of one pipe.

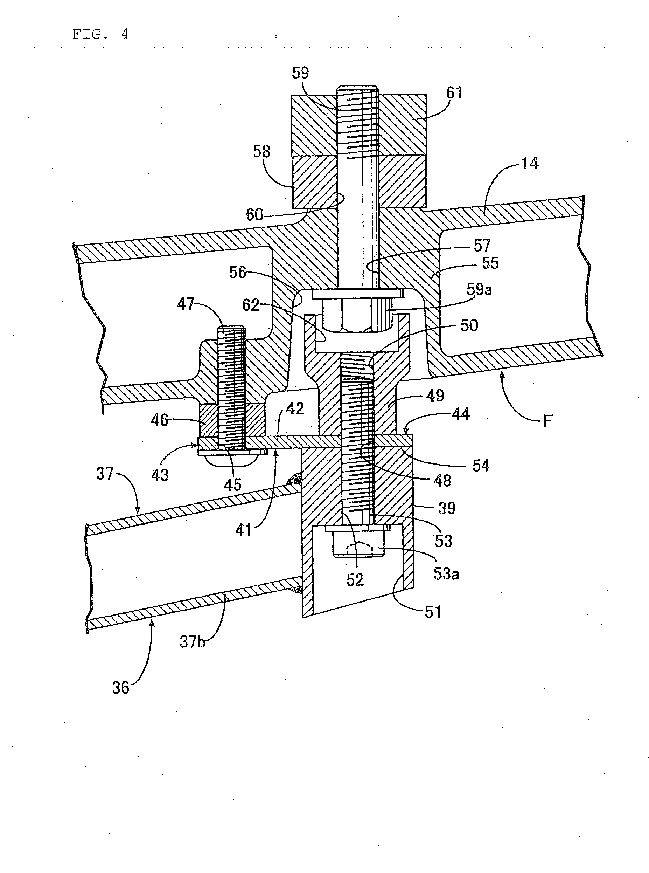

Referring also to FIG. 4, a pair of left and right brackets 41, 41 that are members separate from the guard pipes 36, 36 are fixed to both of the left and right sides of the vehicle body frame F configuring part of the vehicle body B. In this first embodiment, the brackets 41, 41 are attached to outer side surfaces of the pair of left and right main frames 14, 14.

A bracket 41 is formed of an iron material and has a mounting part 43, a guard pipe support part 44, and a support plate part 42 that is formed into a flat plate shape along a plane perpendicular to the vehicle width direction and links the mounting part 43 and the guard pipe support part 44. In this first embodiment, the mounting part 43 is provided at a front part of the support plate part 42 extending in a front-rear direction, and the guard pipe support part 44 is provided at a rear part of the support plate part 42.

The mounting part 43 of the bracket 41 is fixed to an outer side surface of a main frame 14 and the monolithically connected left and right guard pipes 36, 36 are fixed to guard pipe support parts 44 of both of the brackets 41.

The mounting part 43 is made by providing a first insertion hole 45 at the front part of the support plate part 42, and a cylindrical collar 46 is interposed between the mounting part 43 and the outer side surface of the main frame 14. Furthermore, by screwing a bolt 47 inserted in the first insertion hole 45 and the collar 46 to the main frame 14 and tightening it, the mounting part 43 at the front part of the support plate part 42 is attached to the main frame 14. In this state, the rear part of the support plate part 42 can bend in such a manner as to be displaced in the vehicle width direction.

The strength and rigidity of the whole guard pipe 36 can be changed also depending on the material of the collar 46. In this first embodiment, the collar 46 is formed of an aluminum alloy.

A second insertion hole 48 is provided at the rear part of the support plate part 42, and the guard pipe support part 44 is made by bonding a nut 49 having a screw hole 50 coaxially communicating with the second insertion hole 48 to the surface of the support plate part 42 on the side of the main frame 14.

The mounting member 39 of the guard pipe 36 is formed into a short columnar shape and has a first recess 51 opened toward the opposite side to the guard pipe support part 44 and a third insertion hole 52 coaxially communicating with the first recess 51. The mounting member 39 is made to abut on the guard pipe support part 44 in such a manner that the third insertion hole 52 coaxially communicates with the second insertion hole 48 of the guard pipe support part 44. By screwing a bolt 53 inserted in the third insertion hole 52 and the second insertion hole 48 to the screw hole 50 of the nut 49 and tightening it, a rear end part of the guard pipe 36 is fixed to the guard pipe support part 44 at the rear part of the bracket 41, and a diameter-increased head 53a of the bolt 53 is housed in the first recess 51.

In addition, an abutting surface 54 of the guard pipe 36 to the guard pipe support part 44 possessed by the bracket 41 attached to the main frame 14 of the vehicle body frame F is disposed closer to the lateral outside than a vehicle body outer side surface of a part corresponding to the guard pipe support part 44, i.e. more than the outer side surface of the main frame 14.

In the main frame 14, a vehicle component mounting part 55 for mounting the engine main body 19 as a vehicle component is provided. In this vehicle component mounting part 55, a second recess 56 opened toward the outer side surface of the main frame 14 and a fourth insertion hole 57 coaxially communicating with the second recess 56 are provided.

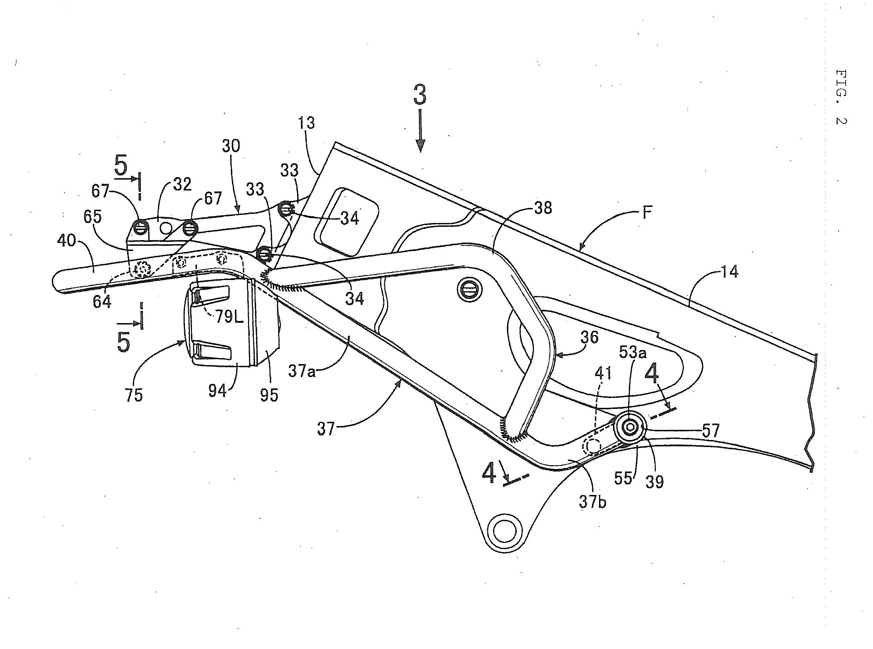

In addition, the vehicle component mounting part 55 is provided in the main frame 14 at such a position as to overlap with, in side view, the guard pipe support part 44 which is provided at the rear part of the support plate part 42 in such a manner as to support the rear end part of the guard pipe 36. Furthermore, the mounting part 43 provided at the front part of the support plate part 42 in the bracket 41 is fixed to the main frame 14 of the vehicle body frame F at such a position as to be covered by the guard pipe 36 from the lateral outside. Accordingly, as shown in FIG. 2, almost the whole bracket 41 is covered from the lateral outside by the rear inclined part 37b in the main pipe 37 of the guard pipe 36 and by the mounting member 39.

The engine main body 19 is provided with a support portion 61 that is disposed inside the vehicle component mounting part 55 in the vehicle width direction in such a manner as to be attached to the vehicle component mounting part 55, and e.g. a collar 58 having an insertion hole 60 is interposed between the support portion 61 and the vehicle component mounting part 55. Furthermore, a bolt 59 inserted in the fourth insertion hole 57 and the insertion hole 60 of the collar 58 is screwed to the support portion 61 in such a manner that a diameter-increased head 59a is housed in the second recess 56 of the vehicle component mounting part 55, and the support portion 61 is attached to the vehicle component mounting part 55 by tightening the bolt 59.

In addition, at least one of the vehicle component mounting part 55 and the diameter-increased head 59a of the bolt 59 inserted in the vehicle component mounting part 55 is fitted with the guard pipe support part 44 of the bracket 41 in such a manner as to permit movement of the guard pipe support part 44 in the vehicle width direction relative to the vehicle body frame F. In this first embodiment, the nut 49 of the guard pipe support part 44 is fitted into the second recess 56 of the vehicle component mounting part 55, and the diameter-increased head 59a of the bolt 59 is fitted into a third recess 62 that is provided in the nut 49 in such a manner as to communicate with the screw hole 50.

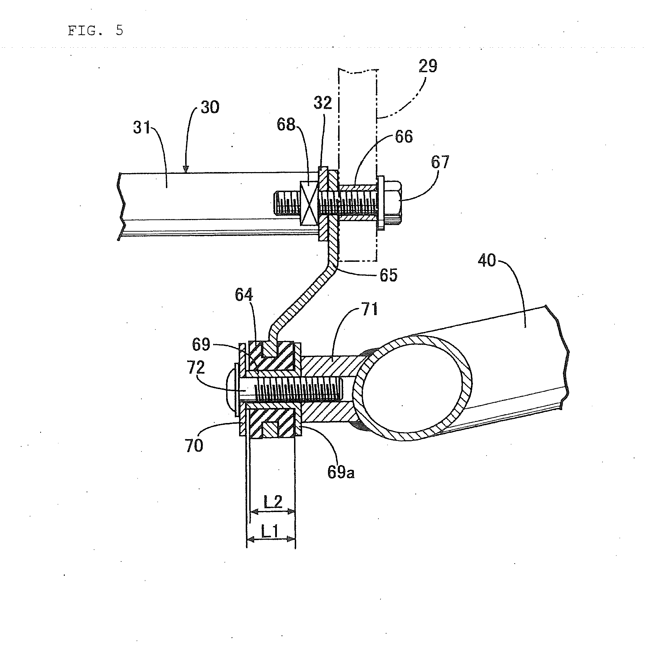

Referring to FIG. 5, left and right two places on the connecting pipe 40, which connects the pair of left and right guard pipes 36, 36, are supported by the front cowl stay 30 with the intermediary of mount rubbers 64, 64 as elastic members.

A pair of collars 66, 66 disposed at an interval in the front-rear direction are buried at parts that are on both the left and right sides of the front cowl 29 and that correspond to the cowl support plates 32, 32 at both ends of the front part of the front cowl stay 30, and upper end parts of guard pipe support plates 65, 65 are sandwiched between these collars 66, 66 and the cowl support plates 32, 32. In addition, bolts 67, 67 inserted in the collars 66, 66, the upper end parts of the guard pipe support plates 65, 65, and the cowl support plates 32, 32 are screwed to weld nuts 68, 68 bonded to the cowl support plates 32, 32. Thereby, the front cowl 29 and the upper end parts of the guard pipe support plates 65, 65 are fastened to the cowl support plates 32, 32 by tightening them together, and the guard pipe support plates 65, 65 droop downward from the cowl support plates 32, 32.

The mount rubber 64 is set on a lower end part of the guard pipe support plate 65. Into this mount rubber 64, a flanged collar 69 having, at its one end, a flange part 69a opposed to one end of the mount rubber 64 is fitted. The other end of the flanged collar 69 abuts on a washer 70 opposed to the other end of the mount rubber 64.

A nut 71 is bonded to the connecting pipe 40 by welding or so forth in such a manner that the flange part 69a of the flanged collar 69 is sandwiched between the nut 71 and the mount rubber 64, and a bolt 72 inserted in the washer 70 and the flanged collar 69 is screwed to the nut 71.

Furthermore, a distance L1 between the flange part 69a of the flanged collar 69 and the washer 70 is set longer than a length L2 of the mount rubber 64 in an axial direction (L1 > L2). The connecting portion for the pair of left and right guard pipes 36, 36, i.e. the connecting pipe 40, is supported by the front cowl stay 30 with an allowance in the vehicle width direction set larger than an allowance in a direction perpendicular to the vehicle width direction.

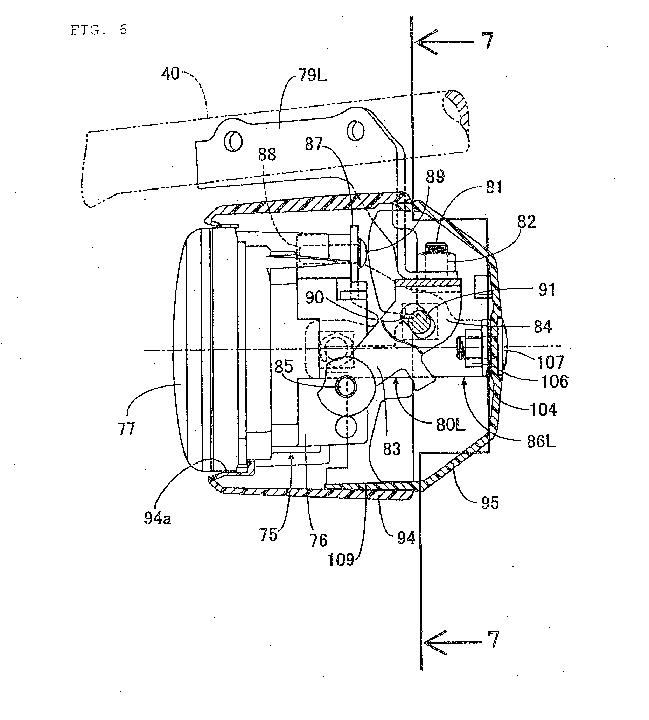

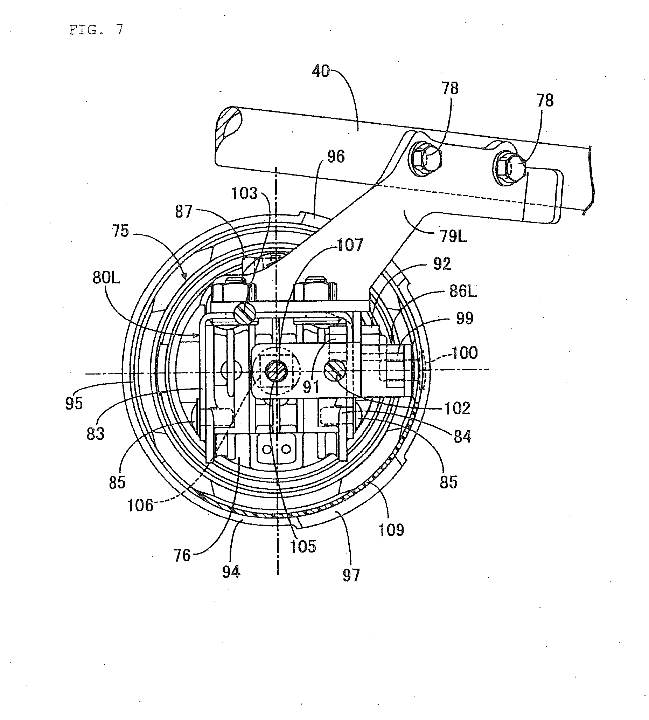

Referring also to FIGS. 6 and 7, fog lamps 75, 75 are supported at both left and right end parts of the connecting pipe 40 which monolithically connects the left and right guard pipes 36, 36. A fog lamp 75 is made by mounting a lens 77 onto a front part of a chassis 76 in such a manner that the lens 77 covers a light source (not shown) disposed at a front end of the chassis 76.

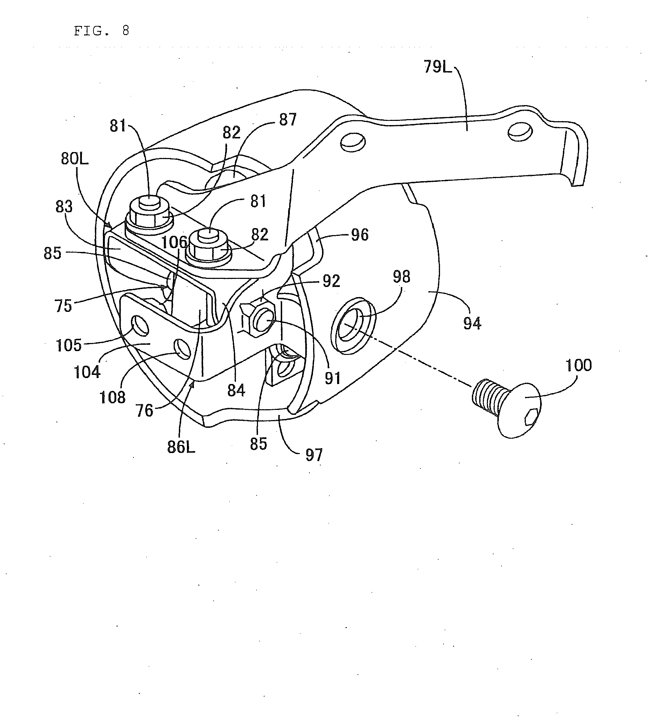

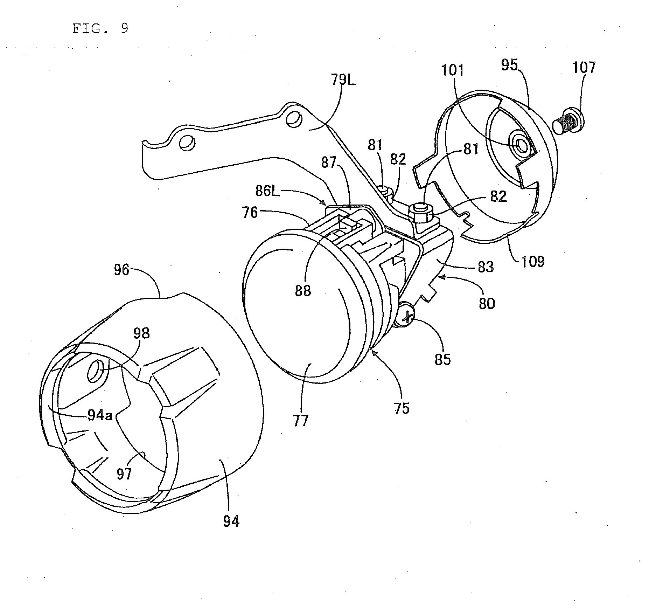

Referring also to FIGS. 8 and 9, rearward of the nut 71 on the left side of the connecting pipe 40, one end part of a first stay 79L for lamp support is fastened by a pair of front and rear bolts 78, 78. This first stay 79L for lamp support is extended from the connecting pipe 40 obliquely downward toward the outside in the vehicle width direction. To the other end part of the first stay 79L for lamp support, a second stay 80L for lamp support is fastened by pairs of bolts 81, 81 and nuts 82, 82. This second stay 80L for lamp support is substantially formed in a U shape that is opened downward and has a pair of side plates 83 and 84 vertically extending at positions at an interval in the vehicle width direction. The nuts 82, 82 are screwed to the bolts 81, 81 bonded to an upper end part of the second stay 80L for lamp support.

Screw members 85, 85 coaxially disposed are inserted at lower parts of both of the side plates 83 and 84 in the second stay 80L for lamp support, and these screw members 85, 85 are screwed to lower parts of both sides of a rear part in the chassis 76 of the fog lamp 75. This enables the fog lamp 75 to rotate about a center axis line of the screw members 85, 85.

A third stay 86L for lamp support is supported on the side plate 84 in the second stay 80L for lamp support. This third stay 86L for lamp support monolithically has a support arm 87 that extends around to a position forward more than the other end part of the first stay 79L for lamp support and the upper end part of the second stay 80L for lamp support and is opposed to an upper part of a rear wall of the chassis 76 in the fog lamp 75. A screw member 89 inserted in this support arm 87 is screwed to a nut 88 set at the upper part of the rear wall of the chassis 76.

An elongated hole 90 having a circular arc shape extending along a virtual circle centered at the center axis line of the screw members 85, 85 is provided in the side plate 84 in the second stay 80L for lamp support. An adjustment bolt 91 inserted in this elongated hole 90 is screwed to a weld nut 92 bonded to the third stay 86L for lamp support. Therefore, an optical axis of the fog lamp 75 can be adjusted in a vertical direction by loosening the adjustment bolt 91 and adjusting the position of the adjustment bolt 91 in the elongated hole 90. Furthermore, one of the pair of bolts 81, 81 for fastening the second stay 80L for lamp support to the other end part of the first stay 79L for lamp support is inserted in an elongated hole (not shown) that is provided in the other end part of the first stay 79L for lamp support and extends in the front-rear direction. By adjusting the position of the bolt 81 in this elongated hole, the optical axis of the fog lamp 75 can be adjusted in a lateral direction.

The fog lamp 75 is covered by a cylindrical cover 94, with the lens 77 at its front end protruded toward the front side, and a cap 95 covering, from the back side, a rear part of the fog lamp 75, the second stay 80L for lamp support, and the third stay 86L for lamp support is connected to a rear part of the cover 94.

A lip 94a that is resiliently in contact with an outer circumference of a front part of the fog lamp 75 is provided at a front end part of the cover 94 across the whole circumference. Thus, a gap between the cover 94 and the fog lamp 75 is not seen from the front side in a state in which the fog lamp 75 is covered by the cover 94.

At the rear part of the cover 94, a pair of notches 96 and 97 is provided at an interval of an angle α, e.g. 116 degrees, therebetween. The angle α is set twice an angle formed by a horizontal line and an extension direction of the first stay 79L for lamp support from a center axis line of the fog lamp 75. An insertion hole 98 is provided at a position that corresponds to a center part between both of the notches 96 and 97 and is at an intermediate part of a sidewall of the cover 94 in the front-rear direction. Furthermore, the cover 94 is supported by the third stay 86L for lamp support by screwing a bolt 100 inserted in the insertion hole 98 to a weld nut 99 bonded to the third stay 86L for lamp support in a state in which the first stay 79L for lamp support is disposed in one notch 96 of both of the notches 96 and 97.

The cap 95 is so formed as to cover a rear end opening of the cover 94. An insertion hole 101 is provided at a center part of this cap 95, and a pair of positioning protrusions 102 and 103 located on the outer side of this insertion hole 101 in a radial direction is provided on an inner surface of the cap 95 with the intermediary of the angle α therebetween.

The third stay 86L for lamp support has a cap support arm 104 opposed to the inner surface of a rear end part of the cap 95. In this cap support arm 104, an insertion hole 105 disposed corresponding to the center axis line of the fog lamp 75 is provided. In addition, a weld nut 106 communicating with the insertion hole 105 is bonded to the cap support arm 104, and a positioning hole 108 located inside the insertion hole 105 in the vehicle width direction is provided in the cap support arm 104.

Furthermore, the inner surface of the rear part of the cap 95 covering, from the back side, the rear part of the left fog lamp 75, the second stay 80L for lamp support, and the third stay 86L for lamp support is made to abut on the cap support arm 104 from the back side in such a manner that one positioning protrusion 102 of both of the positioning protrusions 102 and 103 is fitted into the positioning hole 108. In addition, a screw member 107 inserted in the insertion holes 101 and 105 is screwed to the weld nut 106 and tightened. Thereby, the cap 95 is supported by the third stay 86L for lamp support.

In addition, an extended part 109 protruding toward the front side is monolithically provided at part of a front part of the cap 95 in a circumferential direction. This extended part 109 is so formed as to cover one of the notches 96 and 97 provided in the cover 94 from the inside. The position of the extended part 109 is so determined that the extended part 109 covers the notch 97 from the inside when used for the left fog lamp 75 and covers the notch 96 from the inside when used for the right fog lamp 75.

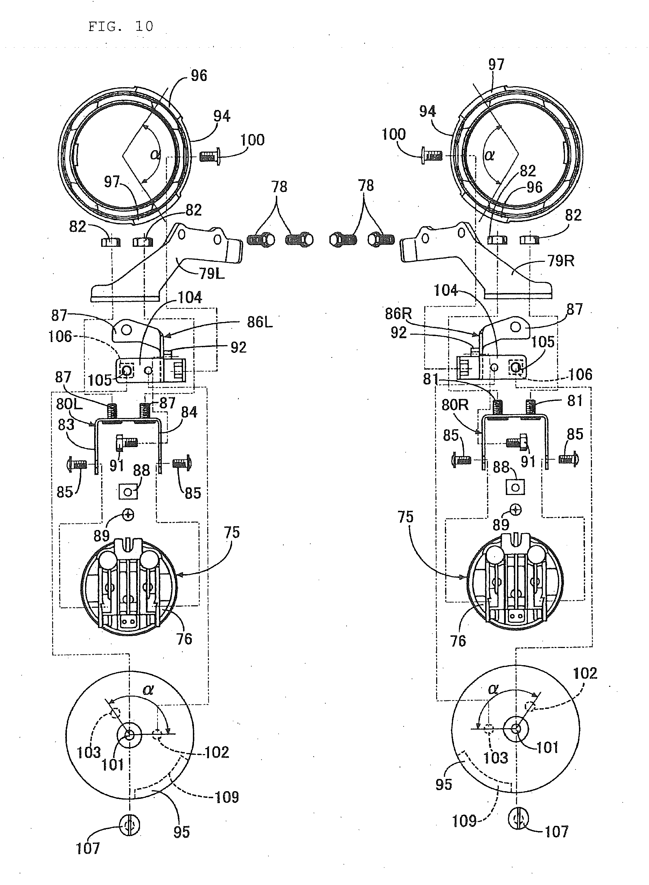

Referring to FIG. 10, the right fog lamp 75 is supported at the right end part of the connecting pipe 40 with the intermediary of a first stay 79R for lamp support, a second stay 80R for lamp support, and a third stay 86R for lamp support. The first stay 79R for lamp support, the second stay 80R for lamp support, and the third stay 86R for lamp support are formed laterally symmetrically with respect to the first stay 79L for lamp support, the second stay 80L for lamp support, and the third stay 86L for lamp support of the left fog lamp 75.

The cover 94 and the cap 95 are used in common to the left and right fog lamps 75, 75. For example, when being used for the right fog lamp 75, the cover 94 and the cap 95 are in a posture obtained by rotation by the angle α from a posture when they are used for the left fog lamp 75. In the right fog lamp 75, the first stay 79R for lamp support is disposed in the notch 97 of the cover 94, and the positioning protrusion 103 of the cap 95 is fitted into the positioning hole 108 of the third stay 86R for lamp support.

Operations of this first embodiment will be described below. Because the left and right guard pipes 36, 36 are monolithically connected, the number of parts can be reduced in comparison with the related-art structure requiring a crossing pipe in addition to the left and right guard pipes 36, 36. In addition, the mounting parts 43, 43 of the pair of left and right brackets 41, 41, each of which has the mounting part 43, the guard pipe support part 44, and the support plate part 42 formed in a flat plate shape along the plane perpendicular to the vehicle width direction and linking the mounting part 43 and the guard pipe support part 44 and is formed as a member separate from the guard pipe 36, are fixed to both of the left and right sides of the vehicle body frame F configuring part of the vehicle body B. Furthermore, the guard pipes 36, 36 are fixed to the guard pipe support parts 44, 44. Therefore, the guard pipes 36, 36 are positioned in the vertical and front-rear directions, and can be displaced in the vehicle width direction due to the bending of the support plate parts 42, 42 of the brackets 41, 41 in the vehicle width direction when a load equal to or larger than a predetermined value acts in the vehicle width direction. Thus, change in the vehicle body rigidity depending on whether or not the guard pipes 36, 36 are present can be suppressed.

Furthermore, because the brackets 41, 41 are formed of an iron material, the support plate parts 42, 42 of the brackets 41, 41 are easy to deform and difficult to rupture. In addition, the guard pipes 36, 36 are formed of an aluminum alloy. Therefore, influence on the weight balance of the vehicle body can be avoided through reduction in the weight of the guard pipes 36, 36 and assembly of the guard pipes 36, 36.

Furthermore, the vehicle body frame F has the pair of left and right main frames 14, 14 extending rearward and downward from the head pipe 13. In the vehicle body frame F having such a shape, connecting the left and right main frames 14, 14 to each other readily causes influence on the lateral rigidity. However, because the left and right guard pipes 36, 36 monolithically connected are mounted on the outer side surfaces of the main frames 14, 14 with the intermediary of the brackets 41, 41, the guard pipes 36, 36 are positioned in the vertical and front-rear directions and are supported on both of the main frames 14, 14 with the intermediary of the brackets 41, 41 in such a manner as to be capable of being displaced in the vehicle width direction when a load equal to or larger than a predetermined value acts in the vehicle width direction. Thus, change in the vehicle body rigidity can be suppressed although the left and right main frames 14, 14 are monolithically connected via the guard pipes 36, 36.

Moreover, the vehicle component mounting parts 55, 55 for mounting the engine main body 19 are provided in the main frames 14, 14 of the vehicle body frame F at such positions as to overlap with the guard pipe support parts 44, 44 of the brackets 41, 41 in side view. Therefore, appearance with a sense of unity of the rear end part of the guard pipes 36, 36 and the vehicle body frame F can be obtained.

In addition, the mounting part 43 of the bracket 41 is fixed to the main frame 14 of the vehicle body frame F at such a position as to be covered by the guard pipe 36 from the lateral outside. Therefore, appearance with a sense of more unity of the guard pipe 36 and the vehicle body frame F can be obtained.

Furthermore, at least one (in this first embodiment, both) of the vehicle component mounting part 55 provided in the main frame 14 of the vehicle body frame F and the diameter-increased head 59a of the bolt 59 inserted in the vehicle component mounting part 55 in order to mount the engine main body 19 and the guard pipe support part 44 of the bracket 41 are fitted into each other in such a manner as to permit the movement of the guard pipe support part 44 in the vehicle width direction relative to the vehicle body frame F. Thus, alignment of the guard pipe support part 44 with respect to the vehicle body frame F is easy and enhancement in the assemblability can be achieved. In addition, the concentricity of the guard pipe support part 44 and the bolt 59 is increased and enhancement in the design can be achieved.

Moreover, the abutting surface 54 of the guard pipe 36 to the guard pipe support part 44 of the bracket 41 attached to the vehicle body frame F is disposed closer to the lateral outside than the vehicle body outer side surface of the part corresponding to the guard pipe support part 44. Thus, the guard pipe 36 can be easily assembled to the bracket 41 from the lateral outside of the vehicle body frame F, so that the assemblability can be enhanced.

Furthermore, the front part of the vehicle body frame F is covered by the front cowl 29 configuring part of the vehicle body B, and the guard pipe 36, whose lower part is along the lower rim of the front cowl 29 in side view, is so formed as to extend toward the front side from the part corresponding to the guard pipe support part 44. In addition, the front end parts of the left and right guard pipes 36, 36 are monolithically connected by the connecting pipe 40 on the front side of the front fork 11 rotatably supporting the front wheel WF. Thus, even the front cowl 29 can also be protected by the guard pipes 36, 36.

In addition, the connecting pipe 40 is supported by the front cowl stay 30, which is fixed to the vehicle body frame F in such a manner as to support the front cowl 29, with the intermediary of the mount rubbers 64, 64. Therefore, in addition to achievement of the structure in which the rear part of the guard pipe 36 is supported by the bracket 41 displaceably in the vehicle width direction, positioning of the guard pipe 36 is surely carried out even when the guard pipe 36 has a shape long in the front-rear direction, and influence on the vehicle body rigidity is also absent.

Moreover, the connecting pipe 40 is supported by the front cowl stay 30 in such a manner that the allowance in the vehicle width direction is set larger than the allowance in the direction perpendicular to the vehicle width direction. Therefore, positioning of the connecting pipe 40 monolithically connecting both of the guard pipes 36, 36 is surely carried out with a smaller allowance in the front-rear and vertical directions. In the vehicle width direction, positioning and supporting of the rear parts of the guard pipes 36, 36 by the brackets 41, 41 are not precluded.

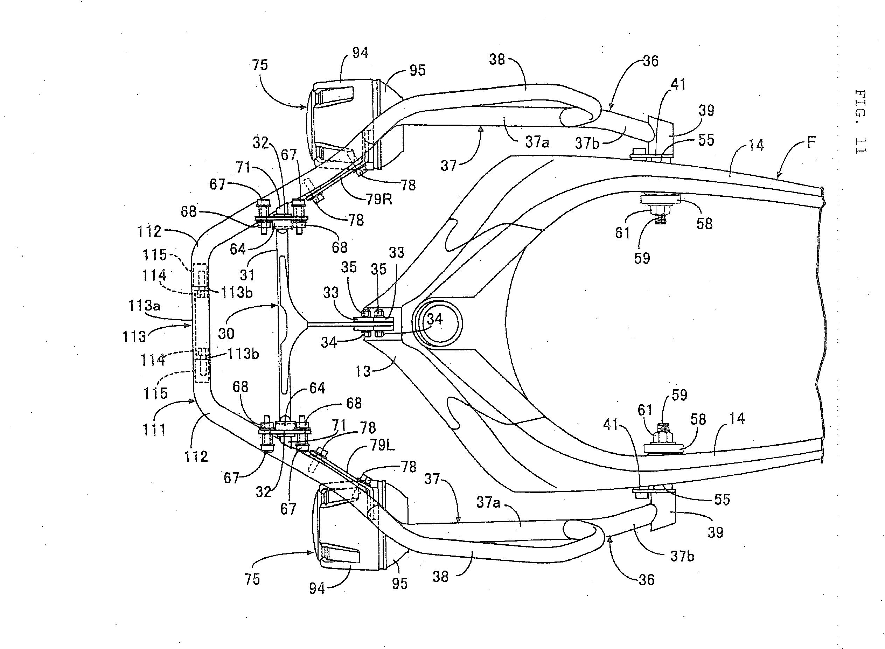

A second embodiment of the present invention will be described below with reference to FIG. 11. The parts corresponding to those in the above-described first embodiment are given the same reference symbols. These parts are merely shown in the diagram and detailed description thereof is omitted.

The pair of left and right guard pipes 36, 36 is monolithically connected via a connecting portion 111. The connecting portion 111 is composed of extended pipe parts 112, 112 that are monolithically continuous with front ends of the main pipes 37, 37 in both of the guard pipes 36, 36 and extend obliquely inward toward the front side and a connecting member 113 that links front end parts of these extended pipe parts 112, 112.

The connecting member 113 is so formed as to monolithically have a connecting member main part 113a that has a circular arc cross-sectional shape with an opened rear part and extends in the vehicle width direction and end wall parts 113b, 113b that close both ends of this connecting member main part 113a. Bolts 114, 114 inserted in both of the end wall parts 113b, 113b are screwed to nuts 115, 115 fixed to the front end parts of both of the extended pipe parts 112, 112. By tightening the bolts 114, 114, the front end parts of both of the extended pipe parts 112, 112 are connected by the connecting member 113, so that the connecting portion 111 is configured.

Also by this second embodiment, the same advantageous effects as those by the above-described first embodiment can be achieved.

Although embodiments of the present invention are described above, the present invention is not limited to the above-described embodiments and various design changes can be made without departing from the present invention set forth in the scope of claims.

### Object

The present invention is, in a two-wheeled motor vehicle in which guard pipes disposed outside both sides of a vehicle body are mounted on these sides, directed to enable reduction in the number of parts with suppression of change in the vehicle body rigidity depending on whether or not the guard pipes are present.

### Solving Means

Mounting parts (43) of a pair of left and right brackets (41) that each have the mounting part (43), a guard pipe support part (44), and a support plate part (42) formed in a flat plate shape along a plane perpendicular to a vehicle width direction and linking the mounting part (43) and the guard pipe support part (44) and are formed as members separate from guard pipes (36) are fixed to both left and right sides of a vehicle body frame (F) configuring part of a vehicle body (B). The left and right guard pipes (36) monolithically connected are fixed to the guard pipe support parts (44) of the pair of left and right brackets (41).

## Claims

1. A two-wheeled motor vehicle comprising left and right guard pipes (36) disposed outside both sides of a vehicle body (B) and mounted on the sides, and a mounting structure of the left and right guard pipes (36) comprising
a pair of left and right brackets (41) each having
a mounting part (43),
a guard pipe support part (44), and
a support plate part (42) formed into a flat plate shape along a plane perpendicular to a vehicle width direction and linking the mounting part (43) and the guard pipe support part (44),
the brackets (41) being formed as members separate from the guard pipes (36),
wherein the mounting parts (43) of the pair of left and right brackets (41) are fixed to both left and right sides of a vehicle body frame (F) configuring part of the vehicle body (B),
the left and right guard pipes (36) monolithically connected are fixed to the guard pipe support parts (44) of the pair of left and right brackets (41) so that the left and right guard pipes (36) can be displaced in the vehicle width direction relative to the vehicle body frame (F) due to the bending of the support plate parts (42) of the pair of left and right brackets (41) in the vehicle width direction when a load equal to or larger than a predetermined value acts on them in the vehicle width direction,
and each guard pipe (36) is so formed as to extend toward a front side from a part corresponding to the guard pipe support part (44), **characterized in that**
a front part of the vehicle body frame (F) is covered by a front cowl (29) configuring part of the vehicle body (B),
on each side of the vehicle body (B) the lower part of the guard pipe (36) is along a lower rim of the front cowl (29) in side view, and
front end parts of the left and right guard pipes (36) are monolithically connected by a connecting portion (40, 111) in front of the front fork (11) rotatably supporting the front wheel (WF).

2. The two-wheeled motor vehicle according to claim 1, wherein the brackets (41) are formed of an iron material.

3. The two-wheeled motor vehicle according to claim 1 or 2, wherein the guard pipes (36) are formed of an aluminum alloy.

4. The two-wheeled motor vehicle according to any one of claims 1 to 3, wherein the vehicle body frame (F) includes
a head pipe (13) that steerably supports the front fork (11) rotatably supporting the front wheel (WF) and
a pair of left and right main frames (14) extending rearward and downward from the head pipe (13), and
the guard pipes (36) are mounted to outer side surfaces of both of the main frames (14) with the intermediary of the brackets (41).

5. The two-wheeled motor vehicle according to any one of claims 1 to 4, wherein on each side of the vehicle body (B) a vehicle component mounting part (55) for mounting a vehicle component (19) is provided in the vehicle body frame (F) at such a position as to overlap with the guard pipe support part (44) in side view.

6. The two-wheeled motor vehicle according to claim 5, wherein on each side of the vehicle body (B) the mounting part (43) is fixed to the vehicle body frame (F) at such a position as to be covered by the guard pipe (36) from lateral outside.

7. The two-wheeled motor vehicle according to claim 5 or 6, wherein on each side of the vehicle body (B) at least one of the vehicle component mounting part (55) provided in the vehicle body frame (F) and a diameter-increased head (59a) of a bolt (59) inserted in the vehicle component mounting part (55) in order to mount the vehicle component (19) is fitted with the guard pipe support part (44) of the bracket (41) in such a manner as to permit movement of the guard pipe support part (44) in the vehicle width direction relative to the vehicle body frame (F).

8. The two-wheeled motor vehicle according to any one of claims 5 to 7, wherein on each side of the vehicle body (B) an abutting surface (54) of the guard pipe (36) to the guard pipe support part (44) of the bracket (41) attached to an outer side surface of a bracket support part of the main frame (14) of the vehicle body frame (F) is disposed laterally outside the outer side surface of the bracket support part of the main frame (14).

9. The two-wheeled motor vehicle according to claim 1, wherein the connecting portion (40, 111) is supported, with the intermediary of an elastic member (64), by a front cowl stay (30) that is fixed to the vehicle body frame (F) in such a manner as to support the front cowl (29).

## Patentansprüche

1. Zweirad-Motorfahrzeug, umfassend linke und rechte Schutzrohre (36), welche außerhalb beider Seiten eines Fahrzeugkörpers (B) angeordnet sind und an die Seiten montiert sind, und eine Montagestruktur von den linken und rechten Schutzrohren (36), umfassend
ein Paar von linken und rechten Halterungen (41), jeweils mit
einem Montageteil (43),
einem Schutzrohrtragteil (44), und
einem Tragplattenteil (42), welches in einer flachen Plattenform entlang einer Ebene orthogonal zu einer Fahrzeugbreitenrichtung ausgebildet ist und das Montageteil (43) und das Schutzrohrtragteil (44) verbindet, wobei die Halterungen (41) als Elemente ausgebildet sind, welche von den Schutzrohren (36) getrennt sind,
wobei die Montageteile (43) von dem Paar von linken und rechten Halterungen (41) an beiden linken und rechten Seiten von einem Fahrzeugkörperrahmen (F) fixiert sind, welcher Teil von dem Fahrzeugkörper (B) konfiguriert,
die linken und rechten Schutzrohre (36), welche monolithisch verbunden sind, an den Schutzrohrtragteilen (44) von dem Paar von linken und rechten Halterungen (41) fixiert sind, so dass die linken und rechten Schutzrohre (36) in der Fahrzeugbreitenrichtung relativ zu dem Fahrzeugkörperrahmen (F) aufgrund der Biegung von den Tragplattenteilen (42) von dem Paar von linken und rechten Halterungen (41) in der Fahrzeugbreitenrichtung verlagert werden können, wenn eine Last, welche gleich oder größer als ein vorbestimmter Wert ist, auf sie in der Fahrzeugbreitenrichtung einwirkt, und wobei jedes Schutzrohr (36) derart ausgebildet ist, dass es sich zu einer Vorderseite hin erstreckt von einem Teil, welches dem Schutzrohrtragteil (44) entspricht,
**dadurch gekennzeichnet, dass**
ein vorderes Teil von dem Fahrzeugkörperrahmen (F) von einer Frontverkleidung (29) abgedeckt ist, welche einen Teil von dem Fahrzeugkörper (B) konfiguriert,
auf jeder Seite von dem Fahrzeugkörper (B) das untere Teil von dem Schutzrohr (36) sich in einer Seitenansicht entlang eines unteren Rands von der Frontverkleidung (29) befindet, und
vordere Endteile von den linken und rechten Schutzrohren (36) monolithisch verbunden sind durch einen Verbindungsabschnitt (40, 111) vor der Vordergabel (11), welche das Vorderrad (WF) drehbar abstützt.

2. Zweirad-Motorfahrzeug nach Anspruch 1, wobei die Halterungen (41) aus einem Eisenmaterial gebildet sind.

3. Zweirad-Motorfahrzeug nach Anspruch 1 oder 2, wobei die Schutzrohre (36) aus einer Aluminiumlegierung gebildet sind.

4. Zweirad-Motorfahrzeug nach einem der Ansprüche 1 bis 3,
wobei der Fahrzeugkörperrahmen (F) umfasst
ein Kopfrohr (13), welches die Vordergabel (11) lenkbar abstützt, welche das Vorderrad (WF) drehbar abstützt, und
ein Paar von linken und rechten Hauptrahmen (14), welche sich von dem Kopfrohr (13) nach hinten und nach unten erstrecken, und
die Schutzrohre (36) an äußeren Seitenflächen von beiden Hauptrahmen (14) unter Zwischenschaltung von den Halterungen (41) montiert sind.

5. Zweirad-Motorfahrzeug nach einem der Ansprüche 1 bis 4, wobei auf jeder Seite von dem Fahrzeugkörper (B) ein Fahrzeugkomponentenmontageteil (55) zum Montieren einer Fahrzeugkomponente (19) in dem Fahrzeugkörperrahmen (F) an einer solchen Position vorgesehen ist, dass es mit dem Schutzrohrtragteil (44) in einer Seitenansicht überlappt.

6. Zweirad-Motorfahrzeug nach Anspruch 5, wobei auf jeder Seite von dem Fahrzeugkörper (B) das Montageteil (43) an dem Fahrzeugkörperrahmen (F) an einer solchen Position fixiert ist, dass es von lateral außen von dem Schutzrohr (36) abgedeckt ist.

7. Zweirad-Motorfahrzeug nach Anspruch 5 oder 6, wobei auf jeder Seite von dem Fahrzeugkörper (B) wenigstens eines von dem Fahrzeugkomponentenmontageteil (55), welches in dem Fahrzeugkörperrahmen (F) vorgesehen ist, und einem durchmesservergrößerten Kopf (59a) von einem Bolzen (59), welcher in das Fahrzeugkomponentenmontageteil (55) eingesetzt ist, um die Fahrzeugkomponente (19) zu montieren, mit dem Schutzrohrtragteil (44) von der Halterung (41) in einer solchen Weise versehen ist, dass eine Bewegung von dem Schutzrohrtragteil (44) in der Fahrzeugbreitenrichtung relativ zu dem Fahrzeugkörperrahmen (F) erlaubt ist.

8. Zweirad-Motorfahrzeug nach einem der Ansprüche 5 bis 7, wobei auf jeder Seite von dem Fahrzeugkörper (B) eine Anlagefläche (54) von dem Schutzrohr (36) an dem Schutzrohrtragteil (44) von der Halterung (41), welche an einer äußeren Seitenfläche von einem Halterungstragteil von dem Hauptrahmen (14) von dem Fahrzeugkörperrahmen (F) angebracht ist, lateral außerhalb der äußeren Seitenfläche von dem Halterungstragteil von dem Hauptrahmen (14) angeordnet ist.

9. Zweirad-Motorfahrzeug nach Anspruch 1, wobei der Verbindungsabschnitt (40, 111) unter Zwischenschaltung von einem elastischen Element (64) von einer Frontverkleidungsstütze (30) abgestützt ist, welche an dem Fahrzeugkörperrahmen (F) fixiert ist, in einer solchen Weise, dass die Frontverkleidung (29) abgestützt ist.

## Revendications

1. Véhicule motorisé à deux roues comprenant des tuyaux protecteurs gauche et droit (36) disposés à l'extérieur des deux côtés d'une carrosserie de véhicule (B) et montés sur les côtés, et une structure de montage des tuyaux protecteurs gauche et droit (36) comprenant
une paire de consoles gauche et droite (41) comportant chacune
une partie de montage (43),
une partie de support de tuyau protecteur (44), et une partie de plaque de support (42) ayant la forme d'une plaque plate le long d'un plan perpendiculaire à un sens de la largeur du véhicule et reliant la partie de montage (43) et la partie de support de tuyau protecteur (44),
les consoles (41) étant formées comme des organes séparés des tuyaux protecteurs (36),
dans lequel les parties de montage (43) de la paire de consoles gauche et droit (41) sont fixées aux côtés à la fois gauche et droit d'un cadre de carrosserie de véhicule (F) configurant une partie de la carrosserie de véhicule (B),
les tuyaux protecteurs gauche et droit (36) raccordés d'un seul bloc sont fixés aux parties de support de tuyau protecteur (44) de la paire de consoles gauche et droite (41), de sorte que les tuyaux protecteurs gauche et droit (36) puissent être déplacés dans le sens de la largeur du véhicule par rapport au cadre de carrosserie de véhicule (F) en raison du pliage des parties de plaque de support (42) de la paire de consoles gauche et droite (41) dans le sens de la largeur du véhicule, lorsqu'une charge supérieure ou égale à une valeur prédéterminée agit sur eux dans le sens de la largeur du véhicule,
et chaque tuyau protecteur (36) est formé de façon à s'étendre vers un côté avant à partir d'une partie correspondant à la partie de support de tuyau protecteur (44), **caractérisé en ce que**
une partie avant du cadre de carrosserie de véhicule (F) est recouverte par un carénage avant (29) configurant une partie de la carrosserie de véhicule (B),
de chaque côté de la carrosserie de véhicule (B), la partie inférieure du tuyau protecteur (36) se trouve le long d'un rebord inférieur du carénage avant (29) en vue latérale, et
des parties d'extrémité avant des tuyaux protecteurs gauche et droit (36) sont raccordées d'un seul bloc par une portion de raccordement (40, 111) devant de la fourche avant (11) supportant en rotation la roue avant (WF).

2. Véhicule motorisé à deux roues selon la revendication 1, dans lequel les consoles (41) sont formées d'un matériau en fer.

3. Véhicule motorisé à deux roues selon la revendication 1 ou 2, dans lequel les tuyaux protecteurs (36) sont formés d'un alliage d'aluminium.

4. Véhicule motorisé à deux roues selon l'une quelconque des revendications 1 à 3, dans lequel le cadre de carrosserie de véhicule (F) inclut
un tube de direction (13) qui supporte de manière orientable la fourche avant (11) supportant en rotation la roue avant (WF) et
une paire de cadres principaux gauche et droit (14) s'étendant vers l'arrière et vers le bas à partir du tube de direction (13), et
les tuyaux protecteurs (36) sont montés sur des surfaces latérales externes des deux cadres principaux (14) par l'intermédiaire des consoles (41).

5. Véhicule motorisé à deux roues selon l'une quelconque des revendications 1 à 4, dans lequel, sur chaque côté de la carrosserie de véhicule (B), une partie de montage de composant de véhicule (55) permettant de monter un composant de véhicule (19) est prévue dans le cadre de carrosserie de véhicule (F) en une position telle à chevaucher la partie de support de tuyau protecteur (44) en vue de profil.

6. Véhicule motorisé à deux roues selon la revendication 5, dans lequel, sur chaque côté de la carrosserie de véhicule (B), la partie de montage (43) est fixée au cadre de carrosserie de véhicule (F) en une position telle à être recouverte par le tuyau protecteur (36) à partir d'un extérieur latéral.

7. Véhicule motorisé à deux roues selon la revendication 5 ou 6, dans lequel, sur chaque côté de la carrosserie de véhicule (B), au moins l'une de la partie de montage de composant de véhicule (55) prévue dans le cadre de carrosserie de véhicule (F) et d'une tête au diamètre augmenté (59a) d'un boulon (59) inséré dans la partie de montage de composant de véhicule (55) afin de monter le composant de véhicule (19) est équipée d'une partie de support de tuyau protecteur (44) de la console (41), de manière à permettre un mouvement de la partie de support de tuyau protecteur (44) dans le sens de la largeur du véhicule par rapport au cadre de carrosserie de véhicule (F).

8. Véhicule motorisé à deux roues selon l'une quelconque des revendications 5 à 7, dans lequel, sur chaque côté de la carrosserie de véhicule (B), une surface de butée (54) du tuyau protecteur (36) vers la partie de support de tuyau protecteur (44) de la console (41) attachée à une surface latérale externe de la partie de support de console du cadre principal (14) du cadre de carrosserie de véhicule (F) est disposée latéralement à l'extérieur de la surface latérale externe de la partie de support de console du cadre principal (14).

9. Véhicule motorisé à deux roues selon la revendication 1, dans lequel la portion de raccordement (40, 111) est supportée, par l'intermédiaire d'un organe élastique (64), par un potelet de carénage avant (30) qui est fixé au cadre de carrosserie de véhicule (F) de manière à supporter le carénage avant (29).
